# EUROPEAN PATENT SPECIFICATION

(11) **EP 3 343 843 B1**
(45) Date of publication and mention of the grant of the patent: **30.09.2020**
(21) Application number: 16306855.4
(22) Date of filing: 30.12.2016
(51) Int. Cl.: H04L 12/40, H04L 12/24, H04L 12/26

(54) **A CONTROL PLANE SYSTEM AND METHOD FOR MANAGING A DATA PLANE AMONGST A PLURALITY OF EQUIPMENTS**
STEUERUNGSEBENENSYSTEM UND VERFAHREN ZUR VERWALTUNG EINER DATENEBENE ZWISCHEN EINER VIELZAHL VON AUSRÜSTUNGEN
SYSTÈME DE PLAN DE COMMANDE ET PROCÉDÉ DE GESTION D'UN PLAN DE DONNÉES PARMI UNE PLURALITÉ D'ÉQUIPEMENTS

(43) Date of publication of application: 04.07.2018
(73) Proprietor: Alcatel Lucent, 91620 Nozay (FR)
(72) Inventor: GALLO, Massimo, 91620 NOZAY (FR); PERINO, Diego, 92130 Issy les Moulineaux (FR); PIANESE, Fabio, 91620 NOZAY (FR); LAUFER, Rafael, Murray Hill, NJ New Jersey 07974-0636 (US)
(74) Representative: Novagraaf Technologies

(56) References cited:
- WO-A1-2015/167597
- WO-A1-2015/192892
- WO-A1-2016/209587
- US-A1- 2016 378 401

## Description

### Field of the invention

The present invention relates to the management of a data plane amongst a plurality of network or bus connected equipments. The invention finds an application particularly in the field of network or bus connected equipments comprising heterogeneous hardware and software devices or modules.

### Background of the invention

Modular software switches have recently attracted a large interest for their versatility and high potential performance, as described in *"*The Click Modular Router", E. Kohler, R. Morris, B. Chen, J. Jannotti, and M. F. Kaashoek, ACM Trans. Comput. Syst., 2000, and in http://openvswitch.org/.

The above publication proposes a software architecture for building flexible and configurable routers. In this software architecture, the router data plane pipeline is composed of a set of elements whose interconnection is expressed with a declarative language. Elements are written as C++ classes, have standard interfaces, and operate on L2-L3 headers. Because of its practical packet abstraction, such a modular router has been widely used and improved over time. However, it does not offer the following key features: support for pipeline distribution across multiple devices (on the same or different machines); support for heterogeneous hardware; scalable packet I/O and processing performance.

Ongoing efforts to improve the base software switch models coupled with new functionalities offered by modern hardware, such as direct memory access (DMA), operating system (OS) bypass, and receive-side scaling (RSS), have shown impressive 40+ Gbps line-rate switching performance on commodity hardware, as explained in *"*Fast userspace packet processing", T. Barbette, C. Soldani, and L. Mathy, in Proceedings of the Eleventh ACM/IEEE Symposium on Architectures for Networking and Communications Systems, ANCS '15, pages 5-16, Washington, DC, USA, 2015, IEEE Computer Society.

In the above publication, the software architecture is reconsidered in the context of modern commodity hardware with multi-core processors and non-uniform memory Access (NUMA) architectures. Through a combination of existing techniques and integration with scalable packet I/O accelerators, this solution significantly speeds-up the traditional software implementation on a regular general-purpose central processing unit (CPU) platform.

The performance limits are now chiefly due to the bottlenecks induced by sequential processing of the incoming packet flows. To increase the achievable throughput, software switches have also been extended with support for NUMA architectures and to exploit graphics processing units (GPUs) as acceleration engines, as described in *"*NBA (network balancing act): A high-performance packet processing framework for heterogeneous processors", J. Kim, K. Jang, K. Lee, S. Ma, J. Shim, and S. Moon, in Proceedings of the Tenth European Conference on Computer Systems, EuroSys '15, pages 22:1-22:14, New York, NY, USA, 2015, ACM, and in *"*Fast and flexible: Parallel packet processing with GPUs and click", W. Sun and R. Ricci, in Proceedings of the Ninth ACM/IEEE Symposium on Architectures for Networking and Communications Systems, ANCS '13, pages 25-36, Piscataway, NJ, USA, 2013, IEEE Press.

The special needs of the GPU accelerator and additional latency introduced by the copy of data over the system bus require the careful tuning of the granularity at which data will be offloaded, both temporal (e.g., aggregation of several related packets into protocol-dependent flows) and spatial (e.g., batching of contiguous packets to maximize DMA throughput, coalescing of data in memory for optimized parallel execution on GPUs).

The invention aims at further extending this trend toward a number of hardware devices that may or may not be physically part of a single machine, but rather could span different pieces of (arbitrarily) connected equipment.

In prior art, modular software switches have been ported to network processing units (NPUs) and have been customized to use the available hardware functions to replace their software-based equivalents, as explained in Cavium, http://www.cavium.com/, in Freescale Semiconductor, http://www.freescale.com/, and in *"*High-performance SW directed packet routing", M. S. Matias Eli, Sami Ruponen, in Deliverable FI3-D1.5.3, Tivit Future Internet Program (Tivit FI), 2012.

These solutions extend the previously presented one, to exploit GPUs as accelerator engines. But these solutions do not consider heterogeneous processing accelerators, nor accelerators that may or may not be physically part of a single device and that could span different pieces of (arbitrarily) connected equipment.

We also know, from *"*Exploiting Parallelism to Scale Software Routers", M. Dobrescu, N. Egi, K. Argyraki, B.-G. Chun, K. Fall, G. Iannaccone, A. Knies, M. Manesh, and S. Ratnasamy. RouteBricks, in Proc. of ACM SIGOPS, 2009, another software router architecture based on the previously described one, that parallelizes router functionality, both across multiple servers and across multiple cores within a single server. The main design principle is to clone the pipeline across cores/server and to optimally map data flows to cores/servers.

Patent document WO 2015/ 167597 A1 discloses a data plane to forward traffic based on communication from a Software Defined Network controller during control plane failure.

### Summary of the invention

Without loss of generality, we are considering in the present description ensembles of devices connected to a hardware platform over a network or a system bus, that may include for example GPUs, NPUs , network processor boards, fast digital signal processors (DSPs), field-programmable gate array (FPGA) modules or application-specific integrated circuits (ASICs), programmable network interface cards (NICs), ternary content-addressable memories (TCAMs), and/or other devices that can be beneficial for network processing at all layers.

The invention relates therefore to a hierarchical extension of a logical software switch platform across a number of distinct, connected hardware devices. The advantages pursued by this extension is the increased ability to distribute the processing load across customized hardware while preserving the consistency of behavior of the resulting network function.

One of the aims of the invention is therefore to solve the above mentioned problems and bring the above mentioned advantages, amongst others.

To this end, the invention proposes a hierarchical modular software switch extension that preserves the modularity of the software router programming model, while adding consistent abstractions and programming constructs that increase its flexibility and usefulness.

According to a first aspect, the object of the invention is a control plane system according to claim 1.

In some embodiments, the system further comprises one or more of the following features, considered alone or according to any technically possible combination:
- each of the slave control planes is further adapted to store and maintain, in the memory of the corresponding active equipment , a bi-dimensional device table gathering in a first dimension the hardware devices where each of the local pipeline elements, placed on the corresponding active equipment, are respectively offloaded to, and gathering in a second dimension the hardware devices where subsets of packets from the data traffic selected according to one or more criteria are delegated to;
- the master control plane and each of the slave control planes are adapted for placing, on one or more of the hardware devices of each of the active equipments, one or more filtering pipeline elements which implement one or more packet filtering functions, such that, when run by the corresponding hardware device, incoming traffic is classified and information relevant for the processing of local pipelines elements is extracted from the incoming traffic;
- the master control plane and each of the slave control planes are adapted for placing, on one or more of the hardware devices of each of the active equipments, one or more monitoring pipeline elements which implement one or more monitoring functions, such that, when run by the corresponding hardware devices, the state, such that the load, of the hardware devices of the corresponding active equipment is monitored, and/or the performance of local pipeline elements is monitored;
- each of the slave control planes is adapted for receiving the information of state of each of the corresponding hardware devices, and/or of performance of local pipeline elements, from the monitoring pipeline element, and for dynamically adapting the placement of the local pipeline elements on the corresponding hardware devices;
- each of the slave control planes is adapted for receiving the information of state of each of the corresponding hardware devices, and/or of performance of local pipeline elements, from the monitoring pipeline element, and for deriving from said information a snapshot of the status of the corresponding active equipment;

According to a second aspect, the object of the invention is also a control plane method according to claim 7.

In some embodiments, the method further comprises one or more of the following features, considered alone or according to any technically possible combination:
- the method further comprises storing and maintaining, by each slave control planes, a bi-dimensional device table in the memory of the corresponding active equipments, said bi-dimensional device table gathering in a first dimension the hardware devices where each of the local pipeline elements, placed on the corresponding active equipment, are respectively offloaded to, and gathering in a second dimension the hardware devices where subsets of packets from the data traffic selected according to one or more criteria are delegated to;
- the method further comprises placing, by the master control plane and each of the slave control planes, on each of the hardware devices of the corresponding active equipments, one or more filtering pipeline elements which implement one or more packet filtering functions, such that, when run by said hardware devices, incoming traffic is classified and information relevant for the processing on local pipelines elements is extracted from the incoming traffic;
- the method further comprises placing, by the master control plane and each of the slave control planes, on each of the hardware devices of the corresponding other active equipments, one or more monitoring pipeline elements which implement one or more monitoring functions, such that, when run by said hardware devices, the state, such that the load, of each of the hardware devices of the corresponding active equipment is monitored, and/or the performance of local pipeline elements is monitored;
- the information of state of each of the corresponding hardware devices, and/or of performance of local pipeline elements, obtained from the monitoring pipeline elements, is received by the corresponding slave control plane, and the placement of the local pipeline elements on the corresponding hardware devices, by the corresponding slave control plane, is dynamically adapted by said corresponding slave control plane according to said information;
- the information of state of each of the corresponding hardware devices, and/or of performance of local pipeline elements, obtained from the monitoring pipeline elements, is received by the corresponding slave control planes and a snapshot of the status of the corresponding active equipment is derived, by the corresponding slave control plane from said information.

According to a third aspect, the object of the invention is also a central equipment according to claim 13.

In some embodiments, the central equipment further comprises one or more of the following features, considered alone or according to any technically possible combination:
- the master control plane is adapted for placing one or more filtering pipeline elements on each of the active equipments which implement one or more packet filtering functions, such that, when run by a processing unit of the corresponding active equipment, incoming traffic is classified and information relevant for the processing of local pipelines elements is extracted from the incoming traffic;
- the master control plane is adapted for placing one or more monitoring pipeline elements on each of the active equipments which implement one or more monitoring functions, such that, when run by a processing unit of the corresponding active equipment, the state, such that the load, of each of the hardware devices of the corresponding active equipment is monitored, and/or the performance of local pipeline elements is monitored.

According to a third aspect, the object of the invention is also a method according to claim 16.

In some embodiments, the method further comprises one or more of the following features, considered alone or according to any technically possible combination:
- the method comprises placing by the master control plane, on each of the active equipments, one or more filtering pipeline elements which implement one or more packet filtering functions, such that, when run by a processing unit of the corresponding active equipment, incoming traffic is classified and information relevant for the processing on local pipelines elements is extracted from the incoming traffic;
- the method further comprises placing by the master control plane, on each of the active equipments, one or more monitoring pipeline elements which implement one or more monitoring functions, such that, when run by a processing unit of the corresponding active equipment, the state, such that the load, of each of the hardware devices of the corresponding active equipment is monitored, and/or the performance of local pipeline elements is monitored.

According to a fourth aspect, the object of the invention is also a determined active equipment according to claim 19.

In some embodiments, the determined equipment further comprises one or more of the following features, considered alone or according to any technically possible combination:
- the slave control plane is further adapted to store and maintain, in the memory of the determined active equipment, a bi-dimensional device table gathering in a first dimension the hardware devices where each of the local pipeline elements, placed on the determined active equipment, are respectively offloaded to, and gathering in a second dimension the hardware devices where subsets of packets from the data traffic selected according to one or more criteria are delegated to;
- wherein the slave control plane is adapted for placing, on one or more of the hardware devices of the determined active equipment, one or more filtering pipeline elements which implement one or more packet filtering functions, such that, when run by the hardware device of the determined equipment, incoming traffic is classified and information relevant for the processing of local pipelines elements is extracted from the incoming traffic;
- the slave control plane is adapted for placing, on one or more of the hardware devices of the determined active equipment, one or more monitoring pipeline elements which implement one or more monitoring functions, such that, when run by the hardware devices of the determined active equipment, the state, such that the load, of the hardware devices of the corresponding active equipment is monitored, and/or the performance of local pipeline elements is monitored;
- the slave control plane of the determined active equipment is adapted for receiving the information of state of the corresponding hardware devices, and/or of performance of local pipeline elements, from the monitoring pipeline element, and for dynamically adapting the placement of the local pipeline elements on the corresponding hardware devices;
- the slave control plane of the determined active equipment is adapted for receiving the information of state of each of the corresponding hardware devices, and/or of performance of local pipeline elements, from the monitoring pipeline element, and for deriving from said information a snapshot of the status of the determined equipment.

According to a fifth aspect, the object of the invention is also a method according to claim 25.

In some embodiments, the method further comprises one or more of the following features, considered alone or according to any technically possible combination:
- the method further comprises storing and maintaining, by each slave control plane, a bi-dimensional device table in the memory of the determined active equipments, said bi-dimensional device table gathering in a first dimension the hardware devices where each of the local pipeline elements, placed on the determined active equipment, are respectively offloaded to, and gathering in a second dimension the hardware devices where subsets of packets from the data traffic selected according to one or more criteria are delegated to;
- the method further comprises placing, by the slave control planes, on each of the hardware devices of the determined active equipments, one or more filtering pipeline elements which implement one or more packet filtering functions, such that, when run by said hardware devices, incoming traffic is classified and information relevant for the processing on local pipelines elements is extracted from the incoming traffic;
- the method further comprises placing, by the slave control planes, on each of the hardware devices of the determined active equipments, one or more monitoring pipeline elements which implement one or more monitoring functions, such that, when run by said hardware devices, the state, such that the load, of each of the hardware devices of the corresponding active equipment is monitored, and/or the performance of local pipeline elements is monitored;
- the information of state of each of the hardware devices of the determined active equipment, and/or of performance of local pipeline elements, obtained from the monitoring pipeline elements, is received by the slave control plane of the determined equipment, and wherein the placement of the local pipeline elements on the hardware devices of the determined equipment by said slave control plane, is dynamically adapted by said slave control plane according to said information;
- the information of state of each of the corresponding hardware devices, and/or of performance of local pipeline elements, obtained from the monitoring pipeline elements, is received by the slave control planes of the determined equipment, and a snapshot of the status of the determined active equipment is derived, by said slave control plane from said information.

Thus, the invention stems from the work on software routers and pushes the boundaries of the SDN (Software-Defined Networking) paradigm towards a more granular decomposition of network functions.

Also, the invention leverages state of the art techniques and fast packet I/O accelerators for pipeline operations CPU elements.

Unlike some of the state of the art techniques, the invention does not clone the same pipeline but rather distribute the different pipeline stages across multiple processing devices, and considers heterogeneous computing architectures.

Besides, unlike some of the state of the art techniques, the invention considers a number of heterogeneous processing accelerators, which may or may not be physically part of a single device and can span different pieces of (arbitrarily) connected equipment.

The invention extends the scope of the trade-offs observed in the simpler GPU+CPU case: the hierarchical decomposition of the processing pipelines creates opportunities for the joint execution on a same device of blocks of functions that may benefit from high throughput or specific hardware support, while preserving seamless access to higher-layer functionalities that require a regular server architecture.

The invention provides:
- low-latency, high-throughput processing primitives on different hardware devices that efficiently utilize the available computing cores;
- integration in the same pipeline of processing primitives over heterogeneous (and possibly distributed) hardware devices with support for high-performance data access and shared state;
- a simple set of abstractions to manage useful data structures (packets, batches, flows) based on their processing requirements.

Furthermore, the invention allows a new dimension of trade-offs by matching the power consumption profile of the devices that constitute the software router and their assigned load. The system of the invention can adapt its behavior and power requirements to both the rate of incoming traffic and the type of network functions being solicited.

The system of the invention allows thus hierarchical management of heterogeneous devices, extending the pipeline concept found in the prior art to allow it to span across devices, and including other types of devices that may be found inside (i.e., on the local peripheral component interconnect express, PCIe, bus) and outside (e.g., over an external network connection) of the equipment.

It manages the choice of modules and operations to be applied to the data flow so that the underlying hardware is properly exploited.

With optimizations applied at compile time, the behavior of the framework can be adapted over time to the observed state of the system.

At the same time, the framework exploits packet switching opportunities both on the ingress data path (e.g., selecting packets with certain properties to be sent to a given hardware queue on the network card, or matching a packet against a signature database in the main memory) and outside the system (e.g., by driving external switches and software routers to direct traffic on specific device interfaces).

### Drawings

The invention and its advantages may be better understood by referring to the description which follows, given as example and for illustrative purpose only, and by referring to the accompanying drawings listed below:
- figure 1: schematic representation of a system according to the invention, with a master control plane, and several slave control planes and passive equipments;
- figure 2: schematic representation of a slave control plane according to the invention.

### Detailed description

The invention aims to provide the developer with a single hierarchical framework that allows integrating and programming several heterogeneous computing devices for high-performance network applications. The framework provides low-level functions that take care of:
- the use of optimized data transfer facilities available to the hardware (e.g., batched DMA transfers);
- the marshalling and unmarshalling of data structures to accommodate the memory requirements of the devices (coalescing, batching) and their hardware capabilities;
- the storage of contextual information that allows to direct a packet flow onto a particular device alongside with its protocol state;
- the switching of target traffic towards the right combination of device and functionality.

From a logical perspective, the system of the invention comprises a control plane and a data plane:
- the control plane is in charge of the placement and management of the data plane pipeline elements across machines and devices;
- the data plane comprises a set of pipeline elements or stages distributed across machines or devices, each of which performs data plane processing on the traffic at all layers.

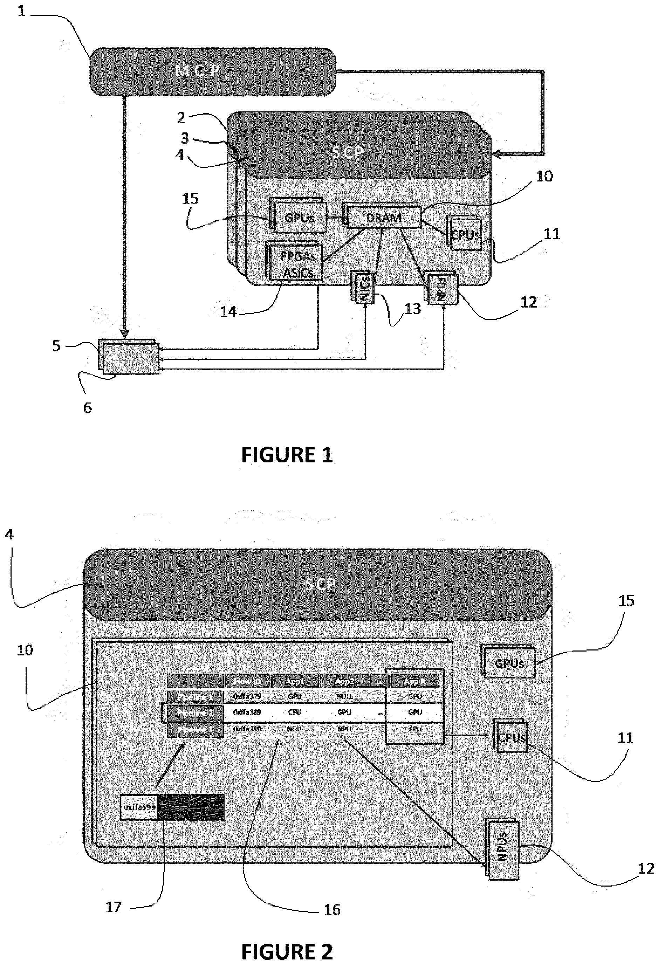

As schematically represented in figures 1 and 2, the control plane system of the invention allows the management of a data plane amongst a plurality of network or system connected equipments 1 to 5.

From a physical perspective, the system of the invention comprises thus:
- active equipments 1 to 4: programmable boards or servers where the elements or stages of a pipeline can be distributed; each active equipment 1 to 4 can be characterized as a set of hardware devices 11 to 15, which can be used to run pipeline elements (e.g., CPU, GPU, NPU, ...)
- passive equipments 5, 6: programmable SDN switches (L2-L3) that can be used to manage network traffic among active equipments 1 to 4.

The management of the processing across heterogeneous devices 11 to 15 is thus orchestrated by the control plane, and preferably also by some specific elements in the data plane such as filtering pipeline elements and monitoring pipeline elements.

The control plane comprises a master control plane 1, or MCP, and several slave control planes 2, 3, 4, or SCPs,

The MCP 1 is a logically centralized entity, logically hosted by one of the active equipments (stored in the memory 10 of said active equipment, a processing unit of this active equipment being able to execute the MCP), active equipment 1 in the example of figures 1 and 2, which is in charge of the dynamic placement and management of the different pipeline stages on the available active equipments 2, 3, 4. As mentioned above, the centralized MCP 1 is hosted in the active equipment 1. Both are referred to with the same numeral reference 1 in figure 1, therefore mixing the logical and the physical perspectives, for simplification of the schematic representation.

The MCP 1 is also responsible of configuring the passive equipments 5, 6 to allow them to transfer traffic amongst the active equipments 1, 2, 3, 4 from/to the desired output/input interfaces.

Besides, the SCPs 2, 3, 4 are logically hosted respectively in each active equipments 2, 3, 4 (stored in the respective memories 10 of said active equipments, a processing unit of each of these active equipments being able to execute the corresponding SCP). Therefore, similarly, for simplification of the schematic representation in figures 1 and 2, the logical and the physical perspectives are mixed, and the SCPs and the corresponding active equipments are thus referred to with the same respective numeral references 2 to 3.

Each of the SCPs 2, 3, 4 is responsible for the dynamic placement and management of data plane elements or stages, or local pipeline elements, placed by the MCP 1 on the corresponding active equipment 2, 3, 4 across the available hardware devices 11 to 15 (e.g., CPU, NPU) of the corresponding active equipment 2, 3, 4.

Besides, amongst the specific elements in the data plane mentioned above, are two main elements that participate in the distributed processing pipeline:
- filters: one or more filtering pipeline elements corresponding to one or more packet filtering functions are implemented as the initial stage of the processing pipeline on each network-connected equipment 2, 3, 4, such that, when run by a processing unit of the corresponding equipment 2, 3, 4, they allow classification of incoming traffic, and extraction of relevant information for the processing of local pipelines;
- monitors: one or more monitoring pipeline elements are, when placed on an active equipment 2, 3, 4 and run by a processing unit of this active equipment 2, 3, 4, are in charge of supervising the state of the different hardware devices 11 to 15 of the corresponding active equipment 2, 3, 4, such as their load, as well as the performance of the various pipeline elements, and of providing this information to the corresponding SCP 2, 3, 4 so that the latter can use it to dynamically configure the local pipelines, thus to dynamically adapt the placement of the local pipelines on the corresponding hardware devices 11 to 15, as well as to derive a snapshot of the equipment status.

The active equipment status can then be shared with the MCP 1 along with some active equipment characteristics, in order to enable dynamic pipeline management, thus adaptation of pipeline elements placement across the active equipments 2, 3, 4. Over time, the MCP 1 may choose to modify the placement of the local pipeline elements, by reconfiguring or even reprogramming devices 11 to 15 in the corresponding SCP 2, 3, 4 in order to optimize network performance.

The system allows thus the processing of pipeline management across multiple active 1, 2, 3, 4 and passive 5, 6 equipments. The goal of a highspeed network processing framework is to maximize the throughput and minimize the latency of the traffic that the system handles. With the inclusion of multiple processing devices 11 to 15, the system of the invention allows the dynamic offload of application processing in the pipeline stages to specific and heterogeneous hardware devices 11 to 15 in order comply with some determined rules, for example in order to meet target constraints (including throughput, latency, but also electrical power footprint, and possibly more). The framework provides a control plane that can support the migration of the context of multiple applications across equipments and devices, maintaining a consistent behavior of the application data plane.

The control plane has a dual role. On one hand, it monitors key variables such as individual hardware devices 11 to 15, function, and link load, device power consumption, and packet latency. On the other hand, it enacts rules or policies that allow it to affect the organization of the various processing pipelines, redistributing load among devices, and transferring the required flow state accordingly.

As illustrated in figure 2, the system of the invention therefore integrates an "horizontal" load balancing capability for processing-intensive applications, with the "vertical" offloading of the processing of entire flows across devices in the framework. The system thus enables a mode of operation in which the two orthogonal dimensions meet and "flow batches" can benefit from both offloading mechanisms.

In the example of figure 2, one can see a bi-dimensional device table 16 stored in the memory 10 of the SCP 4.

Horizontally, for each of the pipelines, the corresponding flow identifiers is indicated, followed by the list of hardware devices, amongst the hardware devices 11 to 15 available in the corresponding active equipment 4, where the pipeline elements or stages of said pipeline are placed, thus offloaded to. This corresponds to the horizontal pipeline split.

For example, the pipeline 2 is horizontally split, for the packet with flow identifier 0xffa389, with the first element (referred to as Appl) offloaded to CPU 11, the second element (referred to as App2) offloaded to GPU 15, and with the N^{th} element (referred to as AppN) offloaded to GPU 15 too.

Vertically, for each of the pipelines elements, the list of hardware devices, amongst the hardware devices 11 to 15 available in the corresponding active equipment 4, where, a subset of packets, such as packet 17, from the data traffic selected according to one or more criteria are delegated to. This corresponds to the vertical application context split.

For example, the N^{th} element (referred to as AppN) is delegated to GPU 15 for the packet with flow identifier 0xff0379, to GPU 15 again for the packet with flow identifier 0xffa389, and to CPU 11 for the packet with flow identifier 0xff0399.

The result goes beyond the switching and basic computing model: in the system of the invention, the flow state is centrally managed at the level of the MCP 1, to ensure its consistency over a protocol's lifetime, and can be transferred across active equipments 2, 3, 4, while passive equipments 5, 6 are configured to redirect traffic consistently with the flow state.

Besides, the system of the invention aims at hiding as much as possible the complexity arising from the presence of heterogeneous devices 11 to 15 to the programmer. The system of the invention not only implements the basic packet abstraction, which is the default vector for communication among modules, but also extends the packet abstraction across devices 11 to 15 (e.g., CPU to NPU) via encapsulation into each of the active equipments.

On the other hand, the system of the invention adopts additional abstractions that exploit the properties of the available hardware devices 11 to 15.

As presented above, with reference to the device table 16 in figure 2, one such abstraction is the batch (vertical application context split), which efficiently encapsulates bulk DMA data transfers on the PCIe bus. Another abstraction is the flow (horizontal pipeline split), which ensures the persistence of state among related packets in a way that is consistent with the protocol's specification.

The data structure 16, or device table 16, as represented in Figure 2, allows therefore a fine-grained management of pipelines in two dimensions. In the horizontal dimension, a set of functions, or applications, Appl, App2, ...., AppN, that belong to a protocol pipeline (pipeline 1, pipeline 2, pipeline 3) are offloaded to different hardware devices 11 to 15. In the vertical dimension, a subset of packets (with flow identifiers 0xffa379, 0xffa389 and 0xffa399), such as packet 17, selected with certain criteria are delegated to a separate hardware devices 11 to 15. Combinations of the two dimensions allow tailoring network function allocation to the properties of the available hardware devices 11 to 15.

Data plane abstractions are implemented by individual elements or stages in the pipeline as a consistent format for stored representation and handling of data. Their role is to provide a developer-friendly interface for processing groups of packets in batches (vertical dimension in device table 16) or singling out packets as belonging to specific flows (horizontal dimension in device table 16). The definition of a packet is universal as it is based on the well-known IP datagram conventions (L3), but the notions of a batch (L1-L3) and flow (L4-L7) have specific ties to the function of certain elements in the pipeline and configuration.

A batch may correspond to a set of contiguous datagrams received on a given interface to be offloaded to a GPU, for example.

A flow can correspond to TCP packets with the same 5-tuple identifier or to packets that are received from/sent to the same input/output port for a higher layer protocol that maintains state.

Batching and flow-tagging elements should thus adapt their classification mechanism according to their position in the pipeline.

A batch is implemented as a structured list of packets, amongst which packet 17. Referring to the last column of device table 16 in figure 2, contiguous pipeline stages involving the GPU are then performed on all packets of a batch (here a batch of three packets with flow identifiers 0xffa379, 0xffa389 and 0xffa399) before moving the batch to the following CPU-based stage.

A flow tag/ID is a simple a numeric value associated to every packet, as illustrated with numeral reference 17 in figure 2, that fulfills some criteria, and used for state lookups to resume protocol processing from the right point.

Packets may be batched/unbatched multiple times in the same pipeline (although at a penalty in latency and throughput) and can be associated with multiple (independent) flow states during the processing, as illustrated again in figure 2.

The above description has been directed to specific embodiments of this invention which is, however, not limited to these embodiments described for purpose of example only. It will be apparent for the man of the art that other variations and modifications may be made to the described embodiments, with obtaining some or all of their advantages. Therefore, it is the object of the appended claims to cover all such variations and modifications.

In particular, the invention concerns a number of hardware devices 11 to 15 that may or may not be physically part of a single machine, but rather could span different pieces of (arbitrarily) connected equipment.

## Claims

1. A control plane system for managing a data plane amongst a plurality of network or system bus connected active (1 to 4) and passive (5, 6) equipments, the control plane system comprising said active (1 to 4) and passive (5, 6) equipments, said data plane being managed using data plane processing pipelines comprising one or more pipeline elements, each of said active equipments (1 to 4) comprising a processing unit, a memory (10) and one or more hardware devices (11 to 15) configured to run a pipeline element, said passive equipments (5, 6) being configured to manage data traffic between active equipments (1 to 4);
wherein one of the active equipments (1 to 4) comprises a master control plane stored in the memory (10) of said one (1) of the active equipments (1 to 4), wherein the master control plane is adapted for, when executed by the processing unit of said one of the active equipment (1), dynamically managing offloading of pipeline elements of the data plane processing pipelines to one or more of the other active equipments (2, 3, 4) according to one or more specific rules, and configuring the passive equipments (5, 6) to transfer traffic amongst the other active equipments (2, 3, 4);
wherein the other active equipments (2, 3, 4) comprising a plurality of slave control planes (2, 3, 4), wherein a slave control plane is respectively stored in the memory (10) of a corresponding other active equipment (2, 3, 4), wherein each slave control plane is adapted for, when executed by the processing unit of the corresponding other active equipment (2, 3, 4), dynamically managing offloading of local pipeline elements, placed on the corresponding other active equipment (2, 3, 4) by the master control plane (1), to one or more of the hardware devices (11 to 15) of the corresponding active equipment (2, 3, 4) according to one or more specific rules.

2. System according to claim 1, wherein each of the slave control planes (2, 3, 4) is further adapted to store and maintain, in the memory (10) of the corresponding active equipment (2, 3, 4), a bi-dimensional device table (16) gathering in a first dimension the hardware devices (11 to 15) where each of the local pipeline elements, placed on the corresponding active equipment (2, 3, 4), are respectively offloaded to, and gathering in a second dimension the hardware devices (11 to 15) where subsets of packets (17) from the data traffic selected according to one or more criteria are delegated to.

3. System according to any of claims 1 and 2, wherein the master control plane (1) and each of the slave control planes (2, 3, 4) are adapted for offloading, to one or more of the hardware devices (11 to 15) of each of the active equipments (2, 3, 4), one or more filtering pipeline elements which implement one or more packet filtering functions, such that, when run by the corresponding hardware device (11 to 15), incoming traffic is classified and information relevant for the processing of local pipelines elements is extracted from the incoming traffic.

4. System according to any of claims 1 to 3, wherein the master control plane (1) and each of the slave control planes (2, 3, 4) are adapted for offloading, to one or more of the hardware devices (11 to 15) of each of the active equipments (2, 3, 4), one or more monitoring pipeline elements which implement one or more monitoring functions, such that, when run by the corresponding hardware devices (11 to 15), the state, such that the load, of the hardware devices (11 to 15) of the corresponding active equipment (2, 3, 4) is monitored, and/or the performance of local pipeline elements is monitored.

5. System according to claim 4, wherein each of the slave control planes (2, 3, 4) is adapted for receiving the information of state of each of the corresponding hardware devices (11 to 15), and/or of performance of local pipeline elements, from the monitoring pipeline element, and for dynamically adapting the offloading of the local pipeline elements to the corresponding hardware devices (11 to 15).

6. System according to any of claim 4 and 5, wherein each of the slave control planes (2, 3, 4) is adapted for receiving the information of state of each of the corresponding hardware devices (11 to 15), and/or of performance of local pipeline elements, from the monitoring pipeline element, and for deriving from said information a snapshot of the status of the corresponding active equipment (2, 3, 4).

7. A control plane method for managing a data plane amongst a plurality of network or system bus connected active (1 to 4) and passive (5, 6) equipments, said data plane being managed using data plane processing pipelines comprising one or more pipeline elements, each of said active equipments (1 to 4) comprising one or more hardware devices (11 to 15) configured to run a pipeline element, said passive equipments (5, 6) being configured to manage data traffic between active equipments (1 to 4), said method comprising:
dynamically managing offloading of the pipeline elements of the data plane processing pipelines to one or more of the active equipments (2, 3, 4) by a master control plane (1) stored in a memory (10) of one of the active equipments (1), according to one or more specific rules,
configuring the passive equipments (5, 6) by the master control plane (1), to transfer traffic amongst the active equipments (2, 3, 4);
dynamically managing, by a corresponding slave control planes (2, 3, 4) stored in a memory (10) of the corresponding active equipment (2, 3, 4), offloading of the local pipeline elements placed on an active equipment (2, 3, 4) by the master control plane (1), to one or more of the hardware devices (11 to 15) of the corresponding active equipment (2, 3, 4), according to one or more specific rules.

8. Method according to claim 7, further comprising storing and maintaining, by each slave control planes (2, 3, 4), a bi-dimensional device table (16) in the memory (10) of the corresponding active equipments (2, 3, 4), said bi-dimensional device table (16) gathering in a first dimension the hardware devices (11 to 15) where each of the local pipeline elements, placed on the corresponding active equipment (2, 3, 4), are respectively offloaded to, and gathering in a second dimension the hardware devices (11 to 15) where subsets of packets (17) from the data traffic selected according to one or more criteria are delegated to.

9. Method according to any of claims 7 and 8, further comprising offloading, by the master control plane (1) and each of the slave control planes (2, 3, 4), to each of the hardware devices (11 to 15) of the corresponding active equipments (2, 3, 4), one or more filtering pipeline elements which implement one or more packet filtering functions, such that, when run by said hardware devices (11 to 15), incoming traffic is classified and information relevant for the processing on local pipelines elements is extracted from the incoming traffic.

10. Method according to any of claims 7 to 9, further comprising offloading, by the master control plane (1) and each of the slave control planes (2, 3, 4), to each of the hardware devices (11 to 15) of the corresponding other active equipments (2, 3, 4), one or more monitoring pipeline elements which implement one or more monitoring functions, such that, when run by said hardware devices (11 to 15), the state, such that the load, of each of the hardware devices (11 to 15) of the corresponding active equipment (2 to 4) is monitored, and/or the performance of local pipeline elements is monitored.

11. Method according to claim 10, wherein the information of state of each of the corresponding hardware devices (11 to 15), and/or of performance of local pipeline elements, obtained from the monitoring pipeline elements, is received by the corresponding slave control plane (2, 3, 4), and wherein the offloading of the local pipeline elements to the corresponding hardware devices (11 to 15), by the corresponding slave control plane (2, 3, 4), is dynamically adapted by said corresponding slave control plane (2, 3, 4) according to said information.

12. Method according to any of claims 10 and 11, wherein the information of state of each of the corresponding hardware devices (11 to 15), and/or of performance of local pipeline elements, obtained from the monitoring pipeline elements, is received by the corresponding slave control planes (2, 3, 4) and a snapshot of the status of the corresponding active equipment (2, 3, 4) is derived, by the corresponding slave control plane (2, 3, 4) from said information.

13. A central equipment (1) for managing a data plane amongst a plurality of network or system bus connected active (1 to 4) and passive (5, 6) equipments, said data plane being managed using data plane processing pipelines comprising one or more pipeline elements, said central equipment (1) being one the of the active equipments (1 to 4) and comprising a processing unit and a memory (10), each of the active equipments (2 to 4) comprising a processing unit, a memory (10) and one or more hardware devices (11 to 15) configured to run a pipeline element, each of said passive equipments (5, 6) being configured to manage data traffic between active equipments (2 to 4);
wherein said central equipment (1) comprises a master control plane (1) stored in the memory (10) of the central equipment (1), wherein the master control plane (1) is adapted for, when executed by the processing unit of said central equipment (1), dynamically managing offloading of pipeline elements of the data plane processing pipelines to one or more of the active equipments (2, 3, 4) according to one or more specific rules, and configuring the passive equipments (5, 6) to transfer traffic amongst the active equipments (2, 3, 4).

14. A central equipment (1) according to claim 13, wherein the master control plane (1) is adapted for offloading one or more filtering pipeline elements to each of the active equipments (2 to 4) which implement one or more packet filtering functions, such that, when run by a processing unit of the corresponding active equipment (2 to 4), incoming traffic is classified and information relevant for the processing of local pipelines elements is extracted from the incoming traffic.

15. A central equipment according to any of claims 13 and 14, wherein the master control plane (1) is adapted for offloading one or more monitoring pipeline elements to each of the active equipments (2 to 4) which implement one or more monitoring functions, such that, when run by a processing unit of the corresponding active equipment (2, 3, 4), the state, such that the load, of each of the hardware devices (11 to 15) of the corresponding active equipment (2, 3, 4) is monitored, and/or the performance of local pipeline elements is monitored.

16. A method for managing, by a central active equipment (1), a data plane amongst a plurality of network or system bus connected active (1 to 4) and passive (5, 6) equipments, said data plane being managed using data plane processing pipelines comprising one or more pipeline elements, said central equipment (1) being one the of the active equipments (1 to 4) and comprising a processing unit and a memory (10), each of the active equipments (2 to 4) comprising a processing unit, a memory (10) and one or more hardware devices (11 to 15) configured to run a pipeline element, each of said passive equipments (5, 6) being configured to manage data traffic between active equipments (2 to 4),
said method comprising:
dynamically managing offloading of the pipeline elements of the data plane to one or more of the active equipments (2, 3, 4) by a master control plane (1) stored in the memory (10) of the central equipment (1), according to one or more specific rules,
configuring the passive equipments (5, 6) by the master control plane (1), to transfer traffic amongst the active equipments (2, 3, 4).

17. A method according to claim 16, further comprising offloading by the master control plane (1), to each of the active equipments (2, 3, 4), one or more filtering pipeline elements which implement one or more packet filtering functions, such that, when run by a processing unit of the corresponding active equipment (2, 3, 4), incoming traffic is classified and information relevant for the processing on local pipelines elements is extracted from the incoming traffic.

18. A method according to any of claims 16 and 17, further comprising offloading by the master control plane (1), to each of the active equipments (2, 3, 4), one or more monitoring pipeline elements which implement one or more monitoring functions, such that, when run by a processing unit of the corresponding active equipment (2, 3, 4), the state, such that the load, of each of the hardware devices (11 to 15) of the corresponding active equipment (2, 3, 4) is monitored, and/or the performance of local pipeline elements is monitored.

19. A determined active equipment (2 to 4) comprising a processing unit, a memory (10) and one or more hardware devices (11 to 15) configured to run a pipeline element of data plane processing pipelines, said determined active equipment (2 to 4) being adapted for connection, in a network or through a system bus, to passive equipments (5, 6) and to a plurality of other active equipments (1 to 4) amongst which a central equipment (1), each of the other active equipments comprising a processing unit, a memory (10) and one or more hardware devices (11 to 15) configured to run a pipeline element of the data plane processing pipelines, each passive equipment (5, 6) being configured to manage data traffic between the determined and other active equipments (1 to 4), said central equipment (1) being configured to dynamically manage, through a master control plane (1) stored in the memory of said central equipment (1), offloading of pipeline elements of the data plane processing pipelines to the determined active equipment (2, 3, 4) according to one or more specific rules, said determined equipment (2 to 4) comprising:
a slave control plane (2, 3, 4) stored in the memory (10) of the determined active equipments (2, 3, 4), adapted for, when executed by the processing unit of the determined active equipment (2, 3, 4), dynamically managing offloading of local pipeline elements, placed in said determined active equipment (2 to 4) by said central equipment (1), to one or more of the hardware devices (11 to 15) of the determined active equipment (2, 3, 4) according to one or more specific rules.

20. A determined active equipment (2 to 4) according to claim 19, wherein the slave control plane (2, 3, 4) is further adapted to store and maintain, in the memory (10) of the determined active equipment (2, 3, 4), a bi-dimensional device table (16) gathering in a first dimension the hardware devices (11 to 15) where each of the local pipeline elements, placed on the determined active equipment (2, 3, 4), are respectively offloaded to, and gathering in a second dimension the hardware devices (11 to 15) where subsets of packets (17) from the data traffic selected according to one or more criteria are delegated to.

21. A determined active equipment (2, 3, 4) according to any of claims 19 and 20, wherein the slave control plane (2, 3, 4) is adapted for offloading, to one or more of the hardware devices (11 to 15) of the determined active equipment (2, 3, 4), one or more filtering pipeline elements which implement one or more packet filtering functions, such that, when run by the hardware device (11 to 15) of the determined equipment (2 to 4), incoming traffic is classified and information relevant for the processing of local pipelines elements is extracted from the incoming traffic.

22. A determined active equipment (2, 3, 4) according to any of claims 19 to 21, wherein the slave control plane (2, 3, 4) is adapted for offlocading, to one or more of the hardware devices (11 to 15) of the determined active equipment (2, 3, 4), one or more monitoring pipeline elements which implement one or more monitoring functions, such that, when run by the hardware devices (11 to 15) of the determined active equipment (2, 3, 4), the state, such that the load, of the hardware devices (11 to 15) of the corresponding active equipment (2, 3, 4) is monitored, and/or the performance of local pipeline elements is monitored.

23. A determined active equipment (2, 3, 4) according to claim 22, wherein the slave control plane (2, 3, 4) of the determined active equipment (2, 3, 4) is adapted for receiving the information of state of the corresponding hardware devices (11 to 15), and/or of performance of local pipeline elements, from the monitoring pipeline element, and for dynamically adapting the offloading of the local pipeline elements to the corresponding hardware devices (11 to 15).

24. A determined active equipment (2, 3, 4) according to any of claims 22 and 23, wherein the slave control plane (2, 3, 4) of the determined active equipment (2, 3, 4) is adapted for receiving the information of state of each of the corresponding hardware devices (11 to 15), and/or of performance of local pipeline elements, from the monitoring pipeline element, and for deriving from said information a snapshot of the status of the determined equipment (2, 3, 4).

25. A method for managing, by a determined active equipment (2 to 4), a data plane comprising one or more pipeline elements, amongst a central active equipment (1) and a plurality of other active equipments (2 to 4) and passive equipments (5, 6), said central (1) and other (2 to 4) active equipments and said passive equipments (5, 6) being network or system bus connected, said equipment (1) comprising a processing unit and a memory (10), said determined and other active equipments (2 to 4) comprising a processing unit, a memory (10) and one or more hardware devices (11 to 15) configured to run a pipeline element, each of said passive equipments (5, 6) being configured to manage data traffic between said determined and other active equipments (2 to 4), said method comprising:
dynamically managing offloading of the pipeline elements of the data plane to one or more of the active equipments (2, 3, 4) by a master control plane (1) stored in a memory (10) of one of the active equipments (1), according to one or more specific rules,
dynamically managing, by a slave control plane (2, 3, 4) stored in a memory (10) of the determined active equipment (2, 3, 4), offloading of local pipeline elements placed on the determined active equipment (2, 3, 4) by a master control plane (1) stored in the central active equipment (1), to one or more of the hardware devices (11 to 15) of the determined active equipment (2, 3, 4), according to one or more specific rules.

26. Method according to claim 25, further comprising storing and maintaining, by each slave control plane (2, 3, 4), a bi-dimensional device table (16) in the memory (10) of the determined active equipments (2, 3, 4), said bi-dimensional device table (16) gathering in a first dimension the hardware devices (11 to 15) where each of the local pipeline elements, placed on the determined active equipment (2, 3, 4), are respectively offloaded to, and gathering in a second dimension the hardware devices (11 to 15) where subsets of packets (17) from the data traffic selected according to one or more criteria are delegated to.

27. Method according to any of claims 25 and 26, further comprising offloading, by the slave control planes (2, 3, 4), to each of the hardware devices (11 to 15) of the determined active equipments (2, 3, 4), one or more filtering pipeline elements which implement one or more packet filtering functions, such that, when run by said hardware devices (11 to 15), incoming traffic is classified and information relevant for the processing on local pipelines elements is extracted from the incoming traffic.

28. Method according to any of claims 25 to 27, further comprising offloading, by the slave control planes (2, 3, 4), to each of the hardware devices (11 to 15) of the determined active equipments (2, 3, 4), one or more monitoring pipeline elements which implement one or more monitoring functions, such that, when run by said hardware devices (11 to 15), the state, such that the load, of each of the hardware devices (11 to 15) of the corresponding active equipment (2 to 4) is monitored, and/or the performance of local pipeline elements is monitored.

29. Method according to claim 28, wherein the information of state of each of the hardware devices (11 to 15) of the determined active equipment (2 to 4), and/or of performance of local pipeline elements, obtained from the monitoring pipeline elements, is received by the slave control plane (2, 3, 4) of the determined equipment (2 to 4), and wherein the offloading of the local pipeline elements to the hardware devices (11 to 15) of the determined equipment (2 to 4) by said slave control plane (2, 3, 4), is dynamically adapted by said slave control plane (2, 3, 4) according to said information.

30. Method according to any of claims 28 and 29, wherein the information of state of each of the corresponding hardware devices (11 to 15), and/or of performance of local pipeline elements, obtained from the monitoring pipeline elements, is received by the slave control planes (2, 3, 4) of the determined equipment (2 to 4), and a snapshot of the status of the determined active equipment (2, 3, 4) is derived, by said slave control plane (2, 3, 4) from said information.

## Patentansprüche

1. Steuerebenensystem zum Verwalten einer Datenebene unter einer Vielzahl von über ein Netzwerk oder einen Systembus verbundenen aktiven (1 bis 4) und passiven (5, 6) Ausrüstungen, wobei das Steuerebenensystem die aktiven (1 bis 4) und die passiven (5, 6) Ausrüstungen umfasst, wobei die Datenebene unter Verwendung von Datenebenenverarbeitungspipelines, die ein oder mehrere Pipelineelemente umfassen, verwaltet wird, wobei jede der aktiven Ausrüstungen (1 bis 4) eine Verarbeitungseinheit, einen Speicher (10) und eine oder mehrere Hardwarevorrichtungen (11 bis 15), die dazu ausgelegt sind, ein Pipelineelement auszuführen, umfasst, wobei die passiven Ausrüstungen (5, 6) dazu ausgelegt sind, Datenverkehr zwischen aktiven Ausrüstungen (1 bis 4) zu verwalten;
wobei eine der aktiven Ausrüstungen (1 bis 4) eine Mastersteuerebene umfasst, die im Speicher (10) der einen (1) der aktiven Ausrüstungen (1 bis 4) gespeichert ist, wobei die Mastersteuerebene, wenn sie von der Verarbeitungseinheit der einen der aktiven Ausrüstungen (1) umgesetzt wird, zum dynamischen Verwalten des Abladens von Pipelineelementen der Datenebenenverarbeitungspipelines auf einer oder mehreren der anderen aktiven Ausrüstungen (2, 3, 4) gemäß einer oder mehreren spezifischen Regeln sowie zum Auslegen der passiven Ausrüstungen (5, 6) zum Übermitteln von Verkehr unter den anderen aktiven Ausrüstungen (2, 3, 4) angepasst ist;
wobei die anderen aktiven Ausrüstungen (2, 3, 4) eine Vielzahl von Slavesteuerebenen (2, 3, 4) umfassen, wobei eine Slavesteuerebene jeweils im Speicher (10) der entsprechenden anderen aktiven Ausrüstung (2, 3, 4) gespeichert ist, wobei jede Slavesteuerebene, wenn sie von der Verarbeitungseinheit der entsprechenden anderen aktiven Ausrüstung (2, 3, 4) umgesetzt wird, zum dynamischen Verwalten des Abladens von lokalen Pipelineelementen, die von der Mastersteuerebene (1) auf der entsprechenden anderen aktiven Ausrüstung (2, 3, 4) platziert werden, auf einer oder mehreren der Hardwarevorrichtungen (11 bis 15) der entsprechenden aktiven Ausrüstung (2, 3, 4) gemäß einer oder mehreren spezifischen Regeln angepasst ist.

2. System nach Anspruch 1, wobei jede der Slavesteuerebenen (2, 3, 4) ferner angepasst ist, eine bidimensionale Vorrichtungstabelle (16), in der in einer ersten Dimension die Hardwarevorrichtungen (11 bis 15) gesammelt werden, auf die jedes der lokalen Pipelineelemente, die auf der entsprechenden aktiven Ausrüstung (2, 3, 4) platziert sind, jeweils abgeladen wird, und in einer zweiten Dimension die Hardwarevorrichtungen (11 bis 15) gesammelt werden, zu denen Untersätze von Paketen (17) aus dem Datenverkehr delegiert werden, die gemäß einem oder mehreren Kriterien ausgewählt werden, im Speicher (10) der entsprechenden aktiven Ausrüstung (2, 3, 4) zu speichern und zu halten.

3. System nach einem der Ansprüche 1 und 2, wobei die Mastersteuerebene (1) und jede der Slavesteuerebenen (2, 3, 4) zum Abladen von einem oder mehreren Filterpipelineelementen, die eine oder mehrere Paketfilterfunktionen implementieren, auf einer oder mehreren der Hardwarevorrichtungen (11 bis 15) jeder der aktiven Ausrüstungen (2, 3, 4) angepasst sind, derart, dass, wenn sie von der entsprechenden Hardwarevorrichtung (11 bis 15) ausgeführt werden, ankommender Verkehr klassifiziert wird und für das Verarbeiten von lokalen Pipelineelementen relevante Informationen aus dem ankommenden Verkehr extrahiert werden.

4. System nach einem der Ansprüche 1 bis 3, wobei die Mastersteuerebene (1) und jede der Slavesteuerebenen (2, 3, 4) zum Abladen von einem oder mehreren Überwachungspipelineelementen, die eine oder mehrere Überwachungsfunktionen implementieren, auf einer oder mehreren der Hardwarevorrichtungen (11 bis 15) jeder der aktiven Ausrüstungen (2, 3, 4) angepasst sind, derart, dass, wenn sie von den entsprechenden Hardwarevorrichtungen (11 bis 15) ausgeführt werden, der Zustand, derart, dass die Last der Hardwarevorrichtungen (11 bis 15) der entsprechenden aktiven Ausrüstung (2, 3, 4) überwacht wird und/oder die Leistung der lokalen Pipelineelemente überwacht wird.

5. System nach Anspruch 4, wobei jede der Slavesteuerebenen (2, 3, 4) zum Empfangen der Informationen zum Zustand jeder der entsprechenden Hardwarevorrichtungen (11 bis 15) und/oder zur Leistung der lokalen Pipelineelemente vom Überwachungspipelineelement und zum dynamischen Anpassen des Abladens der lokalen Pipelineelemente auf den entsprechenden Hardwarevorrichtungen (11 bis 15) angepasst ist.

6. System nach einem der Ansprüche 4 und 5, wobei jede der Slavesteuerebenen (2, 3, 4) zum Empfangen der Informationen zum Zustand jeder der entsprechenden Hardwarevorrichtungen (11 bis 15) und/oder zur Leistung der lokalen Pipelineelemente vom Überwachungspipelineelement und zum Ableiten eines Schnappschusses des Status der entsprechenden aktiven Ausrüstung (2, 3, 4) aus den Informationen angepasst ist.

7. Steuerebenenverfahren zum Verwalten einer Datenebene unter einer Vielzahl von über ein Netzwerk oder einen Systembus verbundenen aktiven (1 bis 4) und passiven (5, 6) Ausrüstungen, wobei die Datenebene unter Verwendung von Datenebenenverarbeitungspipelines, die ein oder mehrere Pipelineelemente umfassen, verwaltet wird, wobei jede der aktiven Ausrüstungen (1 bis 4) eine oder mehrere Hardwarevorrichtungen (11 bis 15), die dazu ausgelegt sind, ein Pipelineelement auszuführen, umfasst, wobei die passiven Ausrüstungen (5, 6) dazu ausgelegt sind, Datenverkehr zwischen aktiven Ausrüstungen (1 bis 4) zu verwalten, wobei das Verfahren Folgendes umfasst:
dynamisches Verwalten des Abladens der Pipelineelemente der Datenebenenverarbeitungspipelines auf einer oder mehreren der aktiven Ausrüstungen (2, 3, 4) durch eine Mastersteuerebene (1), die in einem Speicher (10) von einer der aktiven Ausrüstungen (1) gespeichert ist, gemäß einer oder mehreren spezifischen Regeln,
Auslegen der passiven Ausrüstungen (5, 6) durch die Mastersteuerebene (1) zum Übermitteln von Verkehr unter den aktiven Ausrüstungen (2, 3, 4);
dynamisches Verwalten des Abladens der lokalen Pipelineelemente, die von der Mastersteuerebene (1) auf einer aktiven Ausrüstung (2, 3, 4) platziert werden, auf einer oder mehreren Hardwarevorrichtungen (11 bis 15) der entsprechenden aktiven Ausrüstung (2, 3, 4) durch eine entsprechende Slavesteuerebenen (2, 3, 4), die in einem Speicher (10) der entsprechenden aktiven Ausrüstung (2, 3, 4) gespeichert ist, gemäß einer oder mehreren spezifischen Regeln.

8. Verfahren nach Anspruch 7, das ferner das Speichern und Halten einer bidimensionalen Vorrichtungstabelle (16) im Speicher (10) der entsprechenden aktiven Ausrüstungen (2, 3, 4) durch jede Slavesteuerebenen (2, 3, 4) umfasst, wobei die bidimensionale Vorrichtungstabelle (16) in einer ersten Dimension die Hardwarevorrichtungen (11 bis 15) sammelt, auf die jedes der lokalen Pipelineelemente, die auf der entsprechenden aktiven Ausrüstung (2, 3, 4) platziert sind, jeweils abgeladen wird, und in einer zweiten Dimension die Hardwarevorrichtungen (11 bis 15) sammelt, zu denen Untersätze von Paketen (17) aus dem Datenverkehr delegiert werden, die gemäß einem oder mehreren Kriterien ausgewählt werden.

9. Verfahren nach einem der Ansprüche 7 und 8, das ferner das Abladen von einem oder mehreren Filterpipelineelementen, die eine oder mehrere Paketfilterfunktionen implementieren, auf jeder der Hardwarevorrichtungen (11 bis 15) der entsprechenden aktiven Ausrüstungen (2, 3, 4) durch die Mastersteuerebene (1) und jede der Slavesteuerebenen (2, 3, 4) umfasst, derart, dass, wenn sie von den Hardwarevorrichtungen (11 bis 15) ausgeführt werden, ankommender Verkehr klassifiziert wird und für das Verarbeiten auf lokalen Pipelineelementen relevante Informationen aus dem ankommenden Verkehr extrahiert werden.

10. Verfahren nach einem der Ansprüche 7 bis 9, das ferner das Abladen von einem oder mehreren Überwachungspipelineelementen, die eine oder mehrere Überwachungsfunktionen implementieren, auf jeder der Hardwarevorrichtungen (11 bis 15) der entsprechenden anderen aktiven Ausrüstungen (2, 3, 4) durch die Mastersteuerebene (1) und jede der Slavesteuerebenen (2, 3, 4) umfasst, derart, dass, wenn sie von den Hardwarevorrichtungen (11 bis 15) ausgeführt werden, der Zustand, derart, dass die Last jeder der Hardwarevorrichtungen (11 bis 15) der entsprechenden aktiven Ausrüstung (2 bis 4) überwacht wird und/oder die Leistung der lokalen Pipelineelemente überwacht wird.

11. Verfahren nach Anspruch 10, wobei die Informationen zum Zustand jeder der entsprechenden Hardwarevorrichtungen (11 bis 15) und/oder zur Leistung der lokalen Pipelineelemente, die von den Überwachungspipelineelementen erhalten werden, von der entsprechenden Slavesteuerebene (2, 3, 4) empfangen werden und wobei das Abladen der lokalen Pipelineelemente auf den entsprechenden Hardwarevorrichtungen (11 bis 15) durch die entsprechende Slavesteuerebene (2, 3, 4) von der entsprechenden Slavesteuerebene (2, 3, 4) gemäß den Informationen dynamisch angepasst wird.

12. Verfahren nach einem der Ansprüche 10 und 11, wobei die Informationen zum Zustand jeder der entsprechenden Hardwarevorrichtungen (11 bis 15) und/oder zur Leistung der lokalen Pipelineelemente, die von den Überwachungspipelineelementen erhalten werden, von den entsprechenden Slavesteuerebenen (2, 3, 4) empfangen werden und ein Schnappschuss des Status der entsprechenden aktiven Ausrüstung (2, 3, 4) von der entsprechenden Slavesteuerebene (2, 3, 4) aus den Informationen abgeleitet wird.

13. Zentrale Ausrüstung (1) zum Verwalten einer Datenebene unter einer Vielzahl von über ein Netzwerk oder einen Systembus verbundenen aktiven (1 bis 4) und passiven (5, 6) Ausrüstungen, wobei die Datenebene unter Verwendung von Datenebenenverarbeitungspipelines verwaltet werden, die ein oder mehrere Pipelineelemente umfassen, wobei die zentrale Ausrüstung (1) eine der aktiven Ausrüstungen (1 bis 4) ist und eine Verarbeitungseinheit und einen Speicher (10) umfasst, wobei jede der aktiven Ausrüstungen (2 bis 4) eine Verarbeitungseinheit, einen Speicher (10) und eine oder mehrere Hardwarevorrichtungen (11 bis 15), die dazu ausgelegt sind, ein Pipelineelement auszuführen, umfasst, wobei jede der passiven Ausrüstungen (5, 6) dazu ausgelegt ist, Datenverkehr zwischen aktiven Ausrüstungen (2 bis 4) zu verwalten;
wobei die zentrale Ausrüstung (1) eine Mastersteuerebene (1) umfasst, die im Speicher (10) der zentralen Ausrüstung (1) gespeichert ist, wobei die Mastersteuerebene (1), wenn sie von der Verarbeitungseinheit der zentralen Ausrüstung (1) umgesetzt wird, zum dynamischen Verwalten des Abladens von Pipelineelementen der Datenebenenverarbeitungspipelines auf einer oder mehreren der aktiven Ausrüstungen (2, 3, 4) gemäß einer oder mehreren spezifischen Regeln sowie zum Auslegen der passiven Ausrüstungen (5, 6) zum Übermitteln von Verkehr unter den aktiven Ausrüstungen (2, 3, 4) angepasst ist.

14. Zentrale Ausrüstung (1) nach Anspruch 13, wobei die Mastersteuerebene (1) zum Abladen von einem oder mehreren Filterpipelineelementen auf jeder der aktiven Ausrüstungen (2 bis 4), die eine oder mehrere Paketfilterfunktionen implementieren, angepasst sind, derart, dass, wenn sie von einer Verarbeitungseinheit der entsprechenden aktiven Ausrüstung (2 bis 4) ausgeführt werden, ankommender Verkehr klassifiziert wird und für das Verarbeiten von lokalen Pipelineelementen relevante Informationen aus dem ankommenden Verkehr extrahiert werden.

15. Zentrale Ausrüstung nach einem der Ansprüche 13 und 14, wobei die Mastersteuerebene (1) zum Abladen von einem oder mehreren Überwachungspipelineelementen auf jeder der aktiven Ausrüstungen (2 bis 4), die eine oder mehrere Überwachungsfunktionen implementieren, angepasst ist, derart, dass, wenn sie von einer Verarbeitungseinheit der entsprechenden aktiven Ausrüstung (2, 3, 4) ausgeführt werden, der Zustand, derart, dass die Last jeder der Hardwarevorrichtungen (11 bis 15) der entsprechenden aktiven Ausrüstung (2, 3, 4) überwacht wird und/oder die Leistung der lokalen Pipelineelemente überwacht wird.

16. Verfahren zum Verwalten einer Datenebene unter einer Vielzahl von über ein Netzwerk oder einen Systembus verbundenen aktiven (1 bis 4) und passiven (5, 6) Ausrüstungen durch eine zentrale aktive Ausrüstung (1), wobei die Datenebene unter Verwendung von Datenebenenverarbeitungspipelines verwaltet werden, die ein oder mehrere Pipelineelemente umfassen, wobei die zentrale Ausrüstung (1) eine der aktiven Ausrüstungen (1 bis 4) ist und eine Verarbeitungseinheit und einen Speicher (10) umfasst, wobei jede der aktiven Ausrüstungen (2 bis 4) eine Verarbeitungseinheit, einen Speicher (10) und eine oder mehrere Hardwarevorrichtungen (11 bis 15), die dazu ausgelegt sind, ein Pipelineelement auszuführen, umfasst, wobei jede der passiven Ausrüstungen (5, 6) dazu ausgelegt ist, Datenverkehr zwischen aktiven Ausrüstungen (2 bis 4) zu verwalten,
wobei das Verfahren Folgendes umfasst:
dynamisches Verwalten des Abladens der Pipelineelemente der Datenebene auf einer oder mehreren der aktiven Ausrüstungen (2, 3, 4) durch eine Mastersteuerebene (1), die im Speicher (10) der zentralen Ausrüstung (1) gespeichert ist, gemäß einer oder mehreren spezifischen Regeln,
Auslegen der passiven Ausrüstungen (5, 6) durch die Mastersteuerebene (1) zum Übermitteln von Verkehr unter den aktiven Ausrüstungen (2, 3, 4).

17. Verfahren nach Anspruch 16, das ferner das Abladen von einem oder mehreren Filterpipelineelementen, die eine oder mehrere Paketfilterfunktionen implementieren, durch die Mastersteuerebene (1) auf jeder der aktiven Ausrüstungen (2, 3, 4) umfasst, derart, dass, wenn sie von einer Verarbeitungseinheit der entsprechenden aktiven Ausrüstung (2, 3, 4) ausgeführt werden, ankommender Verkehr klassifiziert wird und für das Verarbeiten auf lokalen Pipelineelementen relevante Informationen aus dem ankommenden Verkehr extrahiert werden.

18. Verfahren nach einem der Ansprüche 16 und 17, das ferner das Abladen von einem oder mehreren Überwachungspipelineelementen, die eine oder mehrere Überwachungsfunktionen implementieren, auf jeder der aktiven Ausrüstungen (2, 3, 4) durch die Mastersteuerebene (1) umfasst, derart, dass, wenn sie von einer Verarbeitungseinheit der entsprechenden aktiven Ausrüstung (2, 3, 4) ausgeführt werden, der Zustand, derart, dass die Last jeder der Hardwarevorrichtungen (11 bis 15) der entsprechenden aktiven Ausrüstung (2, 3, 4) überwacht wird und/oder die Leistung der lokalen Pipelineelemente überwacht wird.

19. Bestimmte aktive Ausrüstung (2 bis 4), die eine Verarbeitungseinheit, einen Speicher (10) und eine oder mehrere Hardwarevorrichtungen (11 bis 15), die dazu ausgelegt sind, ein Pipelineelement von Datenebenenverarbeitungspipelines auszuführen, umfasst, wobei die bestimmte aktive Ausrüstung (2 bis 4) zum Verbinden mit passiven Ausrüstungen (5, 6) und mit einer Vielzahl von anderen aktiven Ausrüstungen (1 bis 4), unter denen sich eine zentrale Ausrüstung (1) befindet, in einem Netzwerk oder über einen Systembus angepasst ist, wobei jede der anderen aktiven Ausrüstungen eine Verarbeitungseinheit, einen Speicher (10) und eine oder mehrere Hardwarevorrichtungen (11 bis 15), die dazu ausgelegt sind, ein Pipelineelement der Datenebenenverarbeitungspipelines auszuführen, umfasst, wobei jede passive Ausrüstung (5, 6) dazu ausgelegt ist, Datenverkehr zwischen der bestimmten und anderen aktiven Ausrüstungen (1 bis 4) zu verwalten, wobei die zentrale Ausrüstung (1) dazu ausgelegt ist, das Abladen von Pipelineelementen der Datenebenenverarbeitungspipelines auf der bestimmten aktiven Ausrüstung (2, 3, 4) gemäß einer oder mehreren spezifischen Regeln über eine Mastersteuerebene (1), die im Speicher der zentralen Ausrüstung (1) gespeichert ist, dynamisch zu verwalten, wobei die bestimmte Ausrüstung (2 bis 4) Folgendes umfasst:
eine Slavesteuerebene (2, 3, 4), die im Speicher (10) der bestimmten aktiven Ausrüstungen (2, 3, 4) gespeichert ist und, wenn sie von der Verarbeitungseinheit der bestimmten aktiven Ausrüstung (2, 3, 4) ausgeführt wird, zum dynamischen Verwalten des Abladens von lokalen Pipelineelementen, die von der zentralen Ausrüstung (1) auf der bestimmten aktiven Ausrüstung (2 bis 4) platziert werden, auf einer oder mehreren der Hardwarevorrichtungen (11 bis 15) der bestimmten aktiven Ausrüstung (2, 3, 4) gemäß einer oder mehreren spezifischen Regeln angepasst ist.

20. Bestimmte aktive Ausrüstung (2 bis 4) nach Anspruch 19, wobei die Slavesteuerebene (2, 3, 4) ferner angepasst ist, eine bidimensionale Vorrichtungstabelle (16), in der in einer ersten Dimension die Hardwarevorrichtungen (11 bis 15) gesammelt werden, auf der jedes der lokalen Pipelineelemente, die auf der bestimmten aktiven Ausrüstung (2, 3, 4) platziert sind, jeweils abgeladen wird, und in einer zweiten Dimension die Hardwarevorrichtungen (11 bis 15) gesammelt werden, zu denen Untersätze von Paketen (17) aus dem Datenverkehr delegiert werden, die gemäß einem oder mehreren Kriterien ausgewählt werden, im Speicher (10) der bestimmten aktiven Ausrüstung (2, 3, 4) zu speichern und zu halten.

21. Bestimmte aktive Ausrüstung (2, 3, 4) nach einem der Ansprüche 19 und 20, wobei die Slavesteuerebene (2, 3, 4) zum Abladen von einem oder mehreren Filterpipelineelementen, die eine oder mehrere Paketfilterfunktionen implementieren, auf einer oder mehreren der Hardwarevorrichtungen (11 bis 15) der bestimmten aktiven Ausrüstung (2, 3, 4) angepasst ist, derart, dass, wenn sie von der Hardwarevorrichtung (11 bis 15) der bestimmten Ausrüstung (2 bis 4) ausgeführt werden, ankommender Verkehr klassifiziert wird und für die Verarbeitung von lokalen Pipelineelementen relevante Informationen aus dem ankommenden Verkehr extrahiert werden.

22. Bestimmte aktive Ausrüstung (2, 3, 4) nach einem der Ansprüche 19 bis 21, wobei die Slavesteuerebene (2, 3, 4) zum Abladen von einem oder mehreren Überwachungspipelineelementen, die eine oder mehrere Überwachungsfunktionen implementieren, auf einer oder mehreren der Hardwarevorrichtungen (11 bis 15) der bestimmten aktiven Ausrüstung (2, 3, 4) angepasst ist, derart, dass, wenn sie von den Hardwarevorrichtungen (11 bis 15) der bestimmten aktiven Ausrüstung (2, 3, 4) ausgeführt werden, der Zustand, derart, dass die Last der Hardwarevorrichtungen (11 bis 15) der entsprechenden aktiven Ausrüstung (2, 3, 4) überwacht wird und/oder die Leistung der lokalen Pipelineelemente überwacht wird.

23. Bestimmte aktive Ausrüstung (2, 3, 4) nach Anspruch 22, wobei die Slavesteuerebene (2, 3, 4) der bestimmten aktiven Ausrüstung (2, 3, 4) zum Empfangen der Informationen zum Zustand der entsprechenden Hardwarevorrichtungen (11 bis 15) und/oder zur Leistung der lokalen Pipelineelemente vom Überwachungspipelineelement sowie zum dynamischen Anpassen des Abladens der lokalen Pipelineelemente auf den entsprechenden Hardwarevorrichtungen (11 bis 15) angepasst ist.

24. Bestimmte aktive Ausrüstung (2, 3, 4) nach einem der Ansprüche 22 und 23, wobei die Slavesteuerebene (2, 3, 4) der bestimmten aktiven Ausrüstung (2, 3, 4) zum Empfangen der Informationen zum Zustand jeder der entsprechenden Hardwarevorrichtungen (11 bis 15) und/oder zur Leistung der lokalen Pipelineelemente vom Überwachungspipelineelement und zum Ableiten eines Schnappschusses des Status der bestimmten Ausrüstung (2, 3, 4) aus den Informationen angepasst ist.

25. Verfahren zum Verwalten einer Datenebene, die ein oder mehrere Pipelineelemente umfasst, unter einer zentralen aktiven Ausrüstung (1) und einer Vielzahl von anderen aktiven Ausrüstungen (2 bis 4) und passiven Elementen (5, 6) durch eine bestimmte aktive Ausrüstung (2 bis 4), wobei die zentrale (1) und die anderen (2 bis 4) aktiven Ausrüstungen und die passiven Ausrüstungen (5, 6) über ein Netzwerk oder einen Systembus verbunden sind, wobei die Ausrüstung (1) eine Verarbeitungseinheit und einen Speicher (10) umfasst, wobei die bestimmte und die anderen aktiven Ausrüstungen (2 bis 4) eine Verarbeitungseinheit, einen Speicher (10) und eine oder mehrere Hardwarevorrichtungen (11 bis 15), die dazu ausgelegt sind, ein Pipelineelement auszuführen, umfassen, wobei jede der passiven Ausrüstungen (5, 6) dazu ausgelegt ist, Datenverkehr zwischen der bestimmten und anderen aktiven Ausrüstungen (2 bis 4) zu verwalten, wobei das Verfahren Folgendes umfasst:
dynamisches Verwalten des Abladens der Pipelineelemente der Datenebene auf einer oder mehreren der aktiven Ausrüstungen (2, 3, 4) durch eine Mastersteuerebene (1), die in einem Speicher (10) von einer der aktiven Ausrüstungen (1) gespeichert ist, gemäß einer oder mehreren spezifischen Regeln,
dynamisches Verwalten des Abladens von lokalen Pipelineelementen, die von einer Mastersteuerebene (1), die in der zentralen aktiven Ausrüstung (1) gespeichert ist, auf der bestimmten aktiven Ausrüstung (2, 3, 4) platziert werden, durch eine Slavesteuerebene (2, 3, 4), die in einem Speicher (10) der bestimmten aktiven Ausrüstung (2, 3, 4) gespeichert ist, auf einer oder mehreren der Hardwarevorrichtungen (11 bis 15) der bestimmten aktiven Ausrüstung (2, 3, 4) gemäß einer oder mehreren spezifischen Regeln.

26. Verfahren nach Anspruch 25, das ferner das Speichern und Halten einer bidimensionalen Vorrichtungstabelle (16) im Speicher (10) der bestimmten aktiven Ausrüstungen (2, 3, 4) durch jede Slavesteuerebene (2, 3, 4) umfasst, wobei die bidimensionale Vorrichtungstabelle (16) in einer ersten Dimension die Hardwarevorrichtungen (11 bis 15) sammelt, auf die jedes der lokalen Pipelineelemente, die auf der bestimmten aktiven Ausrüstung (2, 3, 4) platziert sind, jeweils abgeladen wird, und in einer zweiten Dimension die Hardwarevorrichtungen (11 bis 15) sammelt, zu denen Untersätze von Paketen (17) aus dem Datenverkehr delegiert werden, die gemäß einem oder mehreren Kriterien ausgewählt werden.

27. Verfahren nach einem der Ansprüche 25 und 26, das ferner das Abladen von einem oder mehreren Filterpipelineelementen, die eine oder mehrere Paketfilterfunktionen implementieren, auf jeder der Hardwarevorrichtungen (11 bis 15) der bestimmten aktiven Ausrüstungen (2, 3, 4) durch die Slavesteuerebenen (2, 3, 4) umfasst, derart, dass, wenn sie von den Hardwarevorrichtungen (11 bis 15) ausgeführt werden, ankommender Verkehr klassifiziert wird und für das Verarbeiten auf lokalen Pipelineelementen relevante Informationen aus dem ankommenden Verkehr extrahiert werden.

28. Verfahren nach einem der Ansprüche 25 bis 27, das ferner das Abladen von einem oder mehreren Überwachungspipelineelementen, die eine oder mehrere Überwachungsfunktionen implementieren, auf jeder der Hardwarevorrichtungen (11 bis 15) der bestimmten aktiven Ausrüstungen (2, 3, 4) durch die Slavesteuerebenen (2, 3, 4) umfasst, derart, dass, wenn sie von den Hardwarevorrichtungen (11 bis 15) ausgeführt werden, der Zustand, derart, dass die Last jeder der Hardwarevorrichtungen (11 bis 15) der entsprechenden aktiven Ausrüstung (2 bis 4) überwacht wird und/oder die Leistung der lokalen Pipelineelemente überwacht wird.

29. Verfahren nach Anspruch 28, wobei die Informationen zum Zustand jeder der entsprechenden Hardwarevorrichtungen (11 bis 15) der bestimmten aktiven Ausrüstung (2 bis 4) und/oder zur Leistung der lokalen Pipelineelemente, die von den Überwachungspipelineelementen erhalten werden, von der Slavesteuerebene (2, 3, 4) der bestimmten aktiven Ausrüstung (2 bis 4) empfangen werden und wobei das Abladen der lokalen Pipelineelemente auf den Hardwarevorrichtungen (11 bis 15) der bestimmten aktiven Ausrüstung (2 bis 4) durch die Slavesteuerebene (2, 3, 4) von der Slavesteuerebene (2, 3, 4) gemäß den Informationen dynamisch angepasst wird.

30. Verfahren nach einem der Ansprüche 28 und 29, wobei die Informationen zum Zustand jeder der entsprechenden Hardwarevorrichtungen (11 bis 15) und/oder zur Leistung der lokalen Pipelineelemente, die von den Überwachungspipelineelementen erhalten werden, von den Slavesteuerebenen (2, 3, 4) der bestimmten aktiven Ausrüstung (2 bis 4) empfangen werden und ein Schnappschuss des Status der bestimmten aktiven Ausrüstung (2, 3, 4) von der Slavesteuerebene (2, 3, 4) aus den Informationen abgeleitet wird.

## Revendications

1. Système de plan de contrôle pour gérer un plan de données parmi une pluralité d'équipements actifs (1 à 4) et passifs (5, 6) connectés par bus système ou réseau, le système de plan de contrôle comprenant lesdits équipements actifs (1 à 4) et passifs (5, 6), ledit plan de données étant géré en utilisant des pipelines de traitement de plan de données comprenant un ou plusieurs éléments de pipeline, chacun desdits équipements actifs (1 à 4) comprenant une unité de traitement, une mémoire (10) et un ou plusieurs dispositifs matériels (11 à 15) configurés pour exécuter un élément de pipeline, lesdits équipements passifs (5, 6) étant configurés pour gérer un trafic de données entre des équipements actifs (1 à 4) ;
dans lequel un des équipements actifs (1 à 4) comprend un plan de contrôle maître stocké dans la mémoire (10) dudit un (1) des équipements actifs (1 à 4), dans lequel le plan de contrôle maître est adapté pour, lorsqu'il est exécuté par l'unité de traitement dudit un de l'équipement actif (1), gérer dynamiquement le déchargement d'éléments de pipeline des pipelines de traitement de plan de données vers un ou plusieurs des autres équipements actifs (2, 3, 4) selon une ou plusieurs règles spécifiques, et configurer les équipements passifs (5, 6) pour transférer un trafic parmi les autres équipements actifs (2, 3, 4) ;
dans lequel les autres équipements actifs (2, 3, 4) comprenant une pluralité de plans de contrôle esclaves (2, 3, 4), dans lequel un plan de contrôle esclave est stocké respectivement dans la mémoire (10) d'un autre équipement actif (2, 3, 4) correspondant, dans lequel chaque plan de contrôle esclave est adapté pour, lorsqu'il est exécuté par l'unité de traitement de l'autre équipement actif (2, 3, 4) correspondant, gérer dynamiquement le déchargement d'éléments de pipeline locaux, placés sur l'autre équipement actif (2, 3, 4) correspondant par le plan de contrôle maître (1), vers un ou plusieurs des dispositifs matériels (11 à 15) de l'équipement actif (2, 3, 4) correspondant selon une ou plusieurs règles spécifiques.

2. Système selon la revendication 1, dans lequel chacun des plans de contrôle esclaves (2, 3, 4) est en outre adapté pour stocker et maintenir, dans la mémoire (10) de l'équipement actif (2, 3, 4) correspondant, une table de dispositifs bidimensionnelle (16) rassemblant dans une première dimension les dispositifs matériels (11 à 15) vers lesquels chacun des éléments de pipeline locaux, placés sur l'équipement actif (2, 3, 4) correspondant, est déchargé respectivement, et rassemblant dans une seconde dimension les dispositifs matériels (11 à 15) auxquels des sous-ensembles de paquets (17) du trafic de données sélectionné selon un ou plusieurs critères sont délégués.

3. Système selon l'une quelconque des revendications 1 et 2, dans lequel le plan de contrôle maître (1) et chacun des plans de contrôle esclaves (2, 3, 4) sont adaptés pour décharger, vers un ou plusieurs des dispositifs matériels (11 à 15) de chacun des équipements actifs (2, 3, 4), un ou plusieurs éléments de pipeline de filtrage qui mettent en œuvre une ou plusieurs fonctions de filtrage de paquet, de sorte que, lorsqu'ils sont exécutés par le dispositif matériel (11 à 15) correspondant, un trafic entrant soit classifié et une information pertinente pour le traitement d'éléments de pipeline locaux soit extraite du trafic entrant.

4. Système selon l'une quelconque des revendications 1 à 3, dans lequel le plan de contrôle maître (1) et chacun des plans de contrôle esclaves (2, 3, 4) sont adaptés pour décharger, vers un ou plusieurs des dispositifs matériels (11 à 15) de chacun des équipements actifs (2, 3, 4), un ou plusieurs éléments de pipeline de surveillance qui mettent en œuvre une ou plusieurs fonctions de surveillance, de sorte que, lorsqu'ils sont exécutés par les dispositifs matériels (11 à 15) correspondants, l'état, tel que la charge, des dispositifs matériels (11 à 15) de l'équipement actif (2, 3, 4) correspondant soit surveillé, et/ou la performance d'éléments de pipeline locaux soit surveillée.

5. Système selon la revendication 4, dans lequel chacun des plans de contrôle esclaves (2, 3, 4) est adapté pour recevoir l'information d'état de chacun des dispositifs matériels (11 à 15) correspondants, et/ou de performance d'éléments de pipeline locaux, en provenance de l'élément de pipeline de surveillance, et pour adapter dynamiquement le déchargement des éléments de pipeline locaux vers les dispositifs matériels (11 à 15) correspondants.

6. Système selon l'une quelconque des revendications 4 et 5, dans lequel chacun des plans de contrôle esclaves (2, 3, 4) est adapté pour recevoir l'information d'état de chacun des dispositifs matériels (11 à 15) correspondants, et/ou de performance d'éléments de pipeline locaux, en provenance de l'élément de pipeline de surveillance, et pour dériver de ladite information un instantané du statut de l'équipement actif (2, 3, 4) correspondant.

7. Procédé de plan de contrôle pour gérer un plan de données parmi une pluralité d'équipements actifs (1 à 4) et passifs (5, 6) connectés par bus système ou réseau, ledit plan de données étant géré en utilisant des pipelines de traitement de plan de données comprenant un ou plusieurs éléments de pipeline, chacun desdits équipements actifs (1 à 4) comprenant un ou plusieurs dispositifs matériels (11 à 15) configurés pour exécuter un élément de pipeline, lesdits équipements passifs (5, 6) étant configurés pour gérer un trafic de données entre des équipements actifs (1 à 4), ledit procédé comprenant :
la gestion dynamique du déchargement des éléments de pipeline des pipelines de traitement de plan de données vers un ou plusieurs des équipements actifs (2, 3, 4) par un plan de contrôle maître (1) stocké dans une mémoire (10) d'un des équipements actifs (1), selon une ou plusieurs règles spécifiques,
la configuration des équipements passifs (5, 6) par le plan de contrôle maître (1), pour transférer un trafic parmi les équipements actifs (2, 3, 4) ;
la gestion dynamique, par un plan de contrôle esclave (2, 3, 4) correspondant stocké dans une mémoire (10) de l'équipement actif (2, 3, 4) correspondant, du déchargement des éléments de pipeline locaux placés sur un équipement actif (2, 3, 4) par le plan de contrôle maître (1), vers un ou plusieurs des dispositifs matériels (11 à 15) de l'équipement actif (2, 3, 4) correspondant, selon une ou plusieurs règles spécifiques.

8. Procédé selon la revendication 7, comprenant en outre le stockage et le maintien, par chaque plan de contrôle esclave (2, 3, 4), d'une table de dispositifs bidimensionnelle (16) dans la mémoire (10) des équipements actifs (2, 3, 4) correspondants, ladite table de dispositifs bidimensionnelle (16) rassemblant dans une première dimension les dispositifs matériels (11 à 15) vers lesquels chacun des éléments de pipeline locaux, placés sur l'équipement actif (2, 3, 4) correspondant, est déchargé respectivement, et rassemblant dans une seconde dimension les dispositifs matériels (11 à 15) auxquels des sous-ensembles de paquets (17) du trafic de données sélectionné selon un ou plusieurs critères sont délégués.

9. Procédé selon l'une quelconque des revendications 7 et 8, comprenant en outre le déchargement, par le plan de contrôle maître (1) et chacun des plans de contrôle esclaves (2, 3, 4), vers chacun des dispositifs matériels (11 à 15) des équipements actifs (2, 3, 4) correspondants, d'un ou plusieurs éléments de pipeline de filtrage qui mettent en œuvre une ou plusieurs fonctions de filtrage de paquet, de sorte que, lorsqu'ils sont exécutés par lesdits dispositifs matériels (11 à 15), un trafic entrant soit classifié et une information pertinente pour le traitement sur des éléments de pipelines locaux soit extraite du trafic entrant.

10. Procédé selon l'une quelconque des revendications 7 à 9, comprenant en outre le déchargement, par le plan de contrôle maître (1) et chacun des plans de contrôle esclaves (2, 3, 4), vers chacun des dispositifs matériels (11 à 15) des autres équipements actifs (2, 3, 4) correspondants, d'un ou plusieurs éléments de pipeline de surveillance qui mettent en œuvre une ou plusieurs fonctions de surveillance, de sorte que, lorsqu'ils sont exécutés par lesdits dispositifs matériels (11 à 15), l'état, tel que la charge, de chacun des dispositifs matériels (11 à 15) de l'équipement actif (2 à 4) correspondant soit surveillé, et/ou la performance d'éléments de pipeline locaux soit surveillée.

11. Procédé selon la revendication 10, dans lequel l'information d'état de chacun des dispositifs matériels (11 à 15) correspondants, et/ou de performance d'éléments de pipeline locaux, obtenue à partir des éléments de pipeline de surveillance, est reçue par le plan de contrôle esclave (2, 3, 4) correspondant, et dans lequel le déchargement des éléments de pipeline locaux vers les dispositifs matériels (11 à 15) correspondants, par le plan de contrôle esclave (2, 3, 4) correspondant, est adapté dynamiquement par ledit plan de contrôle esclave (2, 3, 4) correspondant selon ladite information.

12. Procédé selon l'une quelconque des revendications 10 et 11, dans lequel l'information d'état de chacun des dispositifs matériels (11 à 15) correspondants, et/ou de performance d'éléments de pipeline locaux, obtenue à partir des éléments de pipeline de surveillance, est reçue par les plans de contrôle esclaves (2, 3, 4) correspondants et un instantané du statut de l'équipement actif (2, 3, 4) correspondant est dérivé, par le plan de contrôle esclave (2, 3, 4) correspondant de ladite information.

13. Equipement central (1) pour gérer un plan de données parmi une pluralité d'équipements actifs (1 à 4) et passifs (5, 6) connectés par bus système ou réseau, ledit plan de données étant géré en utilisant des pipelines de traitement de plan de données comprenant un ou plusieurs éléments de pipeline, ledit équipement central (1) étant l'un des équipements actifs (1 à 4) et comprenant une unité de traitement et une mémoire (10), chacun des équipements actifs (2 à 4) comprenant une unité de traitement, une mémoire (10) et un ou plusieurs dispositifs matériels (11 à 15) configurés pour exécuter un élément de pipeline, chacun desdits équipements passifs (5, 6) étant configuré pour gérer un trafic de données entre des équipements actifs (2 à 4) ;
dans lequel ledit équipement central (1) comprend un plan de contrôle maître (1) stocké dans la mémoire (10) de l'équipement central (1), dans lequel le plan de contrôle maître (1) est adapté pour, lorsqu'il est exécuté par l'unité de traitement dudit équipement central (1), gérer dynamiquement le déchargement d'éléments de pipeline des pipelines de traitement de plan de données vers un ou plusieurs des équipements actifs (2, 3, 4) selon une ou plusieurs règles spécifiques, et configurer les équipements passifs (5, 6) pour transférer un trafic parmi les équipements actifs (2, 3, 4).

14. Equipement central (1) selon la revendication 13, dans lequel le plan de contrôle maître (1) est adapté pour décharger un ou plusieurs éléments de pipeline de filtrage vers chacun des équipements actifs (2 à 4) qui mettent en œuvre une ou plusieurs fonctions de filtrage de paquet, de sorte que, lorsqu'ils sont exécutés par une unité de traitement de l'équipement actif (2 à 4) correspondant, un trafic entrant soit classifié et une information pertinente pour le traitement d'éléments de pipelines locaux soit extraite du trafic entrant.

15. Equipement central selon l'une quelconque des revendications 13 et 14, dans lequel le plan de contrôle maître (1) est adapté pour décharger un ou plusieurs éléments de pipeline de surveillance vers chacun des équipements actifs (2 à 4) qui mettent en œuvre une ou plusieurs fonctions de surveillance, de sorte que, lorsqu'ils sont exécutés par une unité de traitement de l'équipement actif (2, 3, 4) correspondant, l'état, tel que la charge, de chacun des dispositifs matériels (11 à 15) de l'équipement actif (2, 3, 4) correspondant soit surveillé, et/ou la performance d'éléments de pipeline locaux soit surveillée.

16. Procédé pour gérer, par un équipement actif central (1), un plan de données parmi une pluralité d'équipements actifs (1 à 4) et passifs (5, 6) connectés par bus système ou réseau, ledit plan de données étant géré en utilisant des pipelines de traitement de plan de données comprenant un ou plusieurs éléments de pipeline, ledit équipement central (1) étant l'un des équipements actifs (1 à 4) et comprenant une unité de traitement et une mémoire (10), chacun des équipements actifs (2 à 4) comprenant une unité de traitement, une mémoire (10) et un ou plusieurs dispositifs matériels (11 à 15) configurés pour exécuter un élément de pipeline, chacun desdits équipements passifs (5, 6) étant configuré pour gérer un trafic de données entre des équipements actifs (2 à 4),
ledit procédé comprenant :
la gestion dynamique du déchargement des éléments de pipeline du plan de données vers un ou plusieurs des équipements actifs (2, 3, 4) par un plan de contrôle maître (1) stocké dans la mémoire (10) de l'équipement central (1), selon une ou plusieurs règles spécifiques,
la configuration des équipements passifs (5, 6) par le plan de contrôle maître (1), pour transférer un trafic parmi les équipements actifs (2, 3, 4).

17. Procédé selon la revendication 16, comprenant en outre le déchargement par le plan de contrôle maître (1), vers chacun des équipements actifs (2, 3, 4), d'un ou plusieurs éléments de pipeline de filtrage qui mettent en œuvre une ou plusieurs fonctions de filtrage de paquet, de sorte que, lorsqu'ils sont exécutés par une unité de traitement de l'équipement actif (2, 3, 4) correspondant, un trafic entrant soit classifié et une information pertinente pour le traitement sur des éléments de pipelines locaux soit extraite du trafic entrant.

18. Procédé selon l'une quelconque des revendications 16 et 17, comprenant en outre le déchargement par le plan de contrôle maître (1), vers chacun des équipements actifs (2, 3, 4), d'un ou plusieurs éléments de pipeline de surveillance qui mettent en œuvre une ou plusieurs fonctions de surveillance, de sorte que, lorsqu'ils sont exécutés par une unité de traitement de l'équipement actif (2, 3, 4) correspondant, l'état, tel que la charge, de chacun des dispositifs matériels (11 à 15) de l'équipement actif (2, 3, 4) correspondant soit surveillé, et/ou la performance d'éléments de pipeline locaux soit surveillée.

19. Equipement actif déterminé (2 à 4) comprenant une unité de traitement, une mémoire (10) et un ou plusieurs dispositifs matériels (11 à 15) configurés pour exécuter un élément de pipeline de pipelines de traitement de plan de données, ledit équipement actif déterminé (2 à 4) étant adapté pour la connexion, dans un réseau ou par l'intermédiaire d'un bus système, à des équipements passifs (5, 6) et à une pluralité d'autres équipements actifs (1 à 4) parmi lesquels un équipement central (1), chacun des autres équipements actifs comprenant une unité de traitement, une mémoire (10) et un ou plusieurs dispositifs matériels (11 à 15) configurés pour exécuter un élément de pipeline des pipelines de traitement de plan de données, chaque équipement passif (5, 6) étant configuré pour gérer un trafic de données entre l'équipement actif déterminé et d'autres équipements actifs (1 à 4), ledit équipement central (1) étant configuré pour gérer dynamiquement, par l'intermédiaire d'un plan de contrôle maître (1) stocké dans la mémoire dudit équipement central (1), le déchargement d'éléments de pipeline des pipelines de traitement de plan de données vers l'équipement actif déterminé (2, 3, 4) selon une ou plusieurs règles spécifiques, ledit équipement déterminé (2 à 4) comprenant :
un plan de contrôle esclave (2, 3, 4) stocké dans la mémoire (10) des équipements actifs déterminés (2, 3, 4), adapté pour, lorsqu'il est exécuté par l'unité de traitement de l'équipement actif déterminé (2, 3, 4), gérer dynamiquement le déchargement d'éléments de pipeline locaux, placés dans ledit équipement actif déterminé (2 à 4) par ledit équipement central (1), vers un ou plusieurs des dispositifs matériels (11 à 15) de l'équipement actif déterminé (2, 3, 4) selon une ou plusieurs règles spécifiques.

20. Equipement actif déterminé (2 à 4) selon la revendication 19, dans lequel le plan de contrôle esclave (2, 3, 4) est en outre adapté pour stocker et maintenir, dans la mémoire (10) de l'équipement actif déterminé (2, 3, 4), une table de dispositifs bidimensionnelle (16) rassemblant dans une première dimension les dispositifs matériels (11 à 15) vers lesquels chacun des éléments de pipeline locaux, placés sur l'équipement actif déterminé (2, 3, 4), est déchargé respectivement, et rassemblant dans une seconde dimension les dispositifs matériels (11 à 15) auxquels des sous-ensembles de paquets (17) du trafic de données sélectionné selon un ou plusieurs critères sont délégués.

21. Equipement actif déterminé (2, 3, 4) selon l'une quelconque des revendications 19 et 20, dans lequel le plan de contrôle esclave (2, 3, 4) est adapté pour décharger, vers un ou plusieurs des dispositifs matériels (11 à 15) de l'équipement actif déterminé (2, 3, 4), un ou plusieurs éléments de pipeline de filtrage qui mettent en œuvre une ou plusieurs fonctions de filtrage de paquet, de sorte que, lorsqu'ils sont exécutés par le dispositif matériel (11 à 15) de l'équipement déterminé (2 à 4), un trafic entrant soit classifié et une information pertinente pour le traitement d'éléments de pipelines locaux soit extraite du trafic entrant.

22. Equipement actif déterminé (2, 3, 4) selon l'une quelconque des revendications 19 à 21, dans lequel le plan de contrôle esclave (2, 3, 4) est adapté pour décharger, vers un ou plusieurs des dispositifs matériels (11 à 15) de l'équipement actif déterminé (2, 3, 4), un ou plusieurs éléments de pipeline de surveillance qui mettent en œuvre une ou plusieurs fonctions de surveillance, de sorte que, lorsqu'ils sont exécutés par les dispositifs matériels (11 à 15) de l'équipement actif déterminé (2, 3 , 4), l'état, tel que la charge, des dispositifs matériels (11 à 15) de l'équipement actif (2, 3, 4) correspondant soit surveillé, et/ou la performance d'éléments de pipeline locaux soit surveillée.

23. Equipement actif déterminé (2, 3, 4) selon la revendication 22, dans lequel le plan de contrôle esclave (2, 3, 4) de l'équipement actif déterminé (2, 3, 4) est adapté pour recevoir l'information d'état des dispositifs matériels (11 à 15) correspondants, et/ou de performance d'éléments de pipeline locaux, en provenance de l'élément de pipeline de surveillance, et pour adapter dynamiquement le déchargement des éléments de pipeline locaux vers les dispositifs matériels (11 à 15) correspondants.

24. Equipement actif déterminé (2, 3, 4) selon l'une quelconque des revendications 22 et 23, dans lequel le plan de contrôle esclave (2, 3, 4) de l'équipement actif déterminé (2, 3, 4) est adapté pour recevoir l'information d'état de chacun des dispositifs matériels (11 à 15) correspondants, et/ou de performance d'éléments de pipeline locaux, en provenance de l'élément de pipeline de surveillance, et pour dériver de ladite information un instantané du statut de l'équipement déterminé (2, 3 , 4).

25. Procédé pour gérer, par un équipement actif déterminé (2 à 4), un plan de données comprenant un ou plusieurs éléments de pipeline, parmi un équipement actif central (1) et une pluralité d'autres équipements actifs (2 à 4) et des équipements passifs (5, 6), ledit équipement actif central (1) et lesdits autres équipements actifs (2 à 4) et lesdits équipements passifs (5, 6) étant connectés par bus système ou réseau, ledit équipement (1) comprenant une unité de traitement et une mémoire (10), ledit équipement actif déterminé et lesdits autres équipements actifs (2 à 4) comprenant une unité de traitement, une mémoire (10) et un ou plusieurs dispositifs matériels (11 à 15) configurés pour exécuter un élément de pipeline, chacun desdits équipements passifs (5, 6) étant configuré pour gérer un trafic de données entre ledit équipement actif déterminé et lesdits autres équipements actifs (2 à 4), ledit procédé comprenant :
la gestion dynamique du déchargement des éléments de pipeline du plan de données vers un ou plusieurs des équipements actifs (2, 3, 4) par un plan de contrôle maître (1) stocké dans une mémoire (10) de l'un des équipements actifs (1), selon une ou plusieurs règles spécifiques,
la gestion dynamique, par un plan de contrôle esclave (2, 3, 4) stocké dans une mémoire (10) de l'équipement actif déterminé (2, 3, 4), du déchargement d'éléments de pipeline locaux placés sur l'équipement actif déterminé (2, 3, 4) par un plan de contrôle maître (1) stocké dans l'équipement actif central (1), vers un ou plusieurs des dispositifs matériels (11 à 15) de l'équipement actif déterminé (2, 3, 4), selon une ou plusieurs règles spécifiques.

26. Procédé selon la revendication 25, comprenant en outre le stockage et le maintien, par chaque plan de contrôle esclave (2, 3, 4), d'une table de dispositifs bidimensionnelle (16) dans la mémoire (10) des équipements actifs déterminés (2, 3, 4), ladite table de dispositifs bidimensionnelle (16) rassemblant dans une première dimension les dispositifs matériels (11 à 15) vers lesquels chacun des éléments de pipeline locaux, placés sur l'équipement actif déterminé (2, 3, 4), est déchargé respectivement, et rassemblant dans une seconde dimension les dispositifs matériels (11 à 15) auxquels des sous-ensembles de paquets (17) du trafic de données sélectionné selon un ou plusieurs critères sont délégués.

27. Procédé selon l'une quelconque des revendications 25 et 26, comprenant en outre le déchargement, par les plans de contrôle esclaves (2, 3, 4), vers chacun des dispositifs matériels (11 à 15) des équipements actifs déterminés (2, 3, 4), d'un ou plusieurs éléments de pipeline de filtrage qui mettent en œuvre une ou plusieurs fonctions de filtrage de paquet, de sorte que, lorsqu'ils sont exécutés par lesdits dispositifs matériels (11 à 15), un trafic entrant soit classifié et une information pertinente pour le traitement sur des éléments de pipelines locaux soit extraite du trafic entrant.

28. Procédé selon l'une quelconque des revendications 25 à 27, comprenant en outre le déchargement, par les plans de contrôle esclaves (2, 3, 4), vers chacun des dispositifs matériels (11 à 15) des équipements actifs déterminés (2, 3, 4), d'un ou plusieurs éléments de pipeline de surveillance qui mettent en œuvre une ou plusieurs fonctions de surveillance, de sorte que, lorsqu'ils sont exécutés par lesdits dispositifs matériels (11 à 15), l'état, tel que la charge, de chacun des dispositifs matériels (11 à 15) de l'équipement actif (2 à 4) correspondant soit surveillé, et/ou la performance d'éléments de pipeline locaux soit surveillée.

29. Procédé selon la revendication 28, dans lequel l'information d'état de chacun des dispositifs matériels (11 à 15) de l'équipement actif déterminé (2 à 4), et/ou de performance d'éléments de pipeline locaux, obtenue à partir des éléments de pipeline de surveillance, est reçue par le plan de contrôle esclave (2, 3, 4) de l'équipement déterminé (2 à 4), et dans lequel le déchargement des éléments de pipeline locaux vers les dispositifs matériels (11 à 15) de l'équipement déterminé (2 à 4) par ledit plan de contrôle esclave (2, 3, 4), est adapté dynamiquement par ledit plan de contrôle esclave (2, 3, 4) selon ladite information.

30. Procédé selon l'une quelconque des revendications 28 et 29, dans lequel l'information d'état de chacun des dispositifs matériels correspondants (11 à 15), et/ou de performance d'éléments de pipeline locaux, obtenue à partir des éléments de pipeline de surveillance, est reçue par les plans de contrôle esclaves (2, 3, 4) de l'équipement déterminé (2 à 4), et un instantané du statut de l'équipement actif déterminé (2, 3, 4) est dérivé, par ledit plan de contrôle esclave (2, 3, 4) de ladite information.
